(19) Europäisches Patentamt
European Patent Office
Office européen des brevets

(11) **EP 1 234 278 B1**

(12) **EUROPEAN PATENT SPECIFICATION**

(45) Date of publication and mention of the grant of the patent:
**02.12.2009 Bulletin 2009/49**

(51) Int Cl.:
*G06T 3/40* *(2006.01)*     *G06T 3/00* *(2006.01)*

(21) Application number: **00969744.2**

(22) Date of filing: **20.08.2000**

(86) International application number:
**PCT/IB2000/001569**

(87) International publication number:
**WO 2001/015081 (01.03.2001 Gazette 2001/09)**

(54) **SYSTEM AND METHOD FOR RECTIFIED MOSAICING OF IMAGES RECORDED BY A MOVING CAMERA**

SYSTEM UND VERFAHREN ZUR BERICHTIGUNG EINES DURCH EINE MOBILE KAMERA AUFGEZEICHNETEN MOSAIKAEHNLICHEN BILDES

SYSTEME ET PROCEDE PERMETTANT DE CORRIGER UNE IMAGE MOSAIQUE CREEE A PARTIR D'IMAGES ENREGISTREES PAR UNE CAMERA MOBILE

(84) Designated Contracting States:
**AT BE CH CY DE DK ES FI FR GB GR IE IT LI LU MC NL PT SE**

(30) Priority: **20.08.1999 US 149969 P**
            **29.11.1999 US 168421 P**

(43) Date of publication of application:
**28.08.2002 Bulletin 2002/35**

(73) Proprietors:
  • **YISSUM RESEARCH DEVELOPMENT COMPANY OF THE HEBREW UNIVERSITY OF JERUSALEM**
    **Givat Ram,**
    **Jerusalem 91390 (IL)**
  • **Emaki, Inc.**
    **Fukushima (JP)**

(72) Inventor: **PELEG, Shmuel**
    **90805 Mevaseret Zion (IL)**

(74) Representative: **Skone James, Robert Edmund**
    **Gill Jennings & Every LLP**
    **Broadgate House**
    **7 Eldon Street**
    **London EC2M 7LH (GB)**

(56) References cited:
**WO-A-98/34195**      **US-A- 5 721 624**
**US-B1- 6 173 087**

• **ZOMET A ET AL: "RECTIFIED MOSAICING: MOSAICS WITHOUT THE CURL" PROCEEDINGS 2000 IEEE CONFERENCE ON COMPUTER VISION AND PATTERN RECOGNITION. CVPR 2000. HILTON HEAD ISLAND, SC, JUNE 13-15, 2000, PROCEEDINGS OF THE IEEE COMPUTER CONFERENCE ON COMPUTER VISION AND PATTERN RECOGNITION, LOS ALAMITOS, CA : IEEE COMP. SO, vol. VOL. 2 OF 2, 13 June 2000 (2000-06-13), pages 459-465, XP001035657 ISBN: 0-7803-6527-5**
• **ROUSSO B ET AL: "UNIVERSAL MOSAICING USING PIPE PROJECTION" 6TH INTERNATIONAL CONFERENCE ON COMPUTER VISION. ICCV '98. BOMBAY, JAN. 4 - 7, 1998, IEEE INTERNATIONAL CONFERENCE ON COMPUTER VISION, NEW YORK, NY : IEEE, US, January 1998 (1998-01), pages 945-952, XP000900582 ISBN: 0-7803-5098-7**
• **ZHIGANG ZHU ET AL: "Panoramic EPI Generation and Analysis of Video from a Moving Platform with Vibration" IEEE 0-7695-0149-4, vol. 2, 23 June 1999 (1999-06-23), pages 531-537, XP010347573**
• **SING BING KANG ET AL: "Characterization of errors in compositing panoramic images" COMPUTER VISION AND PATTERN RECOGNITION, 1997. PROCEEDINGS., 1997 IEEE COMPUTER SOCIETY CONFERENCE ON SAN JUAN, PUERTO RICO 17-19 JUNE 1997, LOS ALAMITOS, CA, USA, IEEE COMPUT. SOC, US, 17 June 1997 (1997-06-17), pages 103-109, XP010237509 ISBN: 0-8186-7822-4**

- **JIANG YU ZHENG ET AL: "PANORAMIC REPRESENTATION FOR ROUTE RECOGNITION BY A MOBILE ROBOT" INTERNATIONAL JOURNAL OF COMPUTER VISION, KLUWER ACADEMIC PUBLISHERS, NORWELL, US, vol. 9, no. 1, 1 October 1992 (1992-10-01), pages 55-76, XP000328816 ISSN: 0920-5691**

**Description**

The invention relates generally to the field of generating mosaic images and more particularly to generating a rectified mosaic image from a series of images recorded by a moving camera.

## BACKGROUND OF THE INVENTION

In mosaicing of images, a number of overlapping images of a scene are initially recorded by a camera. Using information in the regions in which the images overlap, a single image is generated which has, for example, a wider field of view of the scene than might be possible otherwise. Typically, mosaic images are generated in connection with a plurality of individual images that are recorded by a camera that is rotated around a stationary optical axis. Such mosaic images provide a panoramic view around the optical axis. Additionally, mosaic images are generated from images recorded by, for example, an aerial camera, translating parallel to the scene and the optical axis is perpendicular both to the scene and to the direction of camera motion.

Problems arise, however, in connection with mosaic images that are be made from images recorded by a camera whose optical axis is moved, that is, translated along a particular path and/or rotated around an axis, particularly when different parts of a scene are located at different distances from the camera. When different parts of a scene are located at different distances from the camera, from image to image they appear to move at different rates. That is, when the camera is moved from the location at which one image is recorded, to the location at which the next image is recorded, with objects in the scene that are close to the camera will move in the image more than objects that are farther from the camera. Similarly, when the camera is rotated from one angular orientation at which one image is recorded, to another angular orientation at which another image is recorded, objects in the scene whose viewing direction makes a larger angle to the rotation axis will move in the image more than objects whose viewing direction makes a smaller angle with the rotation axis. In both cases, when the images are mosaiced, when corresponding points are located in successive images and the images are aligned to form the mosaic therebetween, the images will be mosaiced at an incorrect angle with respect to each other, resulting in a curled mosaic image.

Another problem can arise if, for example, the viewing direction of the camera is not pointed in a direction generally perpendicular to the direction of motion, but instead at an angle thereto. In that case, for example, assume that the camera moves to the right and that the camera is pointed somewhat in the direction of motion, the image contents will generally expand from frame to frame, as the camera gets closer to the objects in sight. When the second image is warped so that corresponding points will match the first image, the size of the second image will shrink, resulting in a mosaic that tapers from left to right. Similarly, when the camera is pointed backward from the direction of motion, the image contents generally shrink from frame to frame. When the second image is warped so that corresponding points will match the first image, the size of the second image will increase, resulting in a mosaic whose dimensions increase from left to right.

## SUMMARY OF THE INVENTION

The invention is defined by the appended claims and provides a new and improved system and method for generating a rectified mosaic image from a series of images recorded by a moving camera.

In brief summary, the invention provides a system and method for generating a rectified mosaic image from a plurality of individual images, the system comprising a quadrangular region defining module, a warping module and a mosaicing module. The quadrangular region defining module is configured to define in one individual image a quadrangular region in relation to two points on a vertical anchor in the one individual image and mappings of two points on a vertical anchor in at least one other individual image into the one individual image wherein each vertical anchor is a vertical image feature that remains invariant under the warping of the quadrangular region of its respective image.. The warping module is configured to warp the quadrangular region to a rectangular region. The mosaicing module configured to mosaic the quadrangular region to the mosaic image.

## BRIEF DESCRIPTION OF THE DRAWINGS

This invention is defined in the appended claims. The above and further advantages of this invention may be better understood by referring to the following description taken in conjunction with the accompanying drawings, in which:

FIG. 1 schematically depicts a system for generating a rectified mosaic image from a series of images recorded by a moving camera, constructed in accordance with the invention;

FIG. 2 schematically depicts operations performed in connection with generating a mosaic image from a series of individual images;

FIGS. 3A through 3D are useful in describing a problem that can arise in connection with generating a mosaic image from a plurality of images of a scene using a moving camera;

FIGS. 4A through 4D are useful in describing a second problem that can arise in connection with generating a mosaic image from a plurality of images of a scene using a moving camera;

FIG. 5A through 5D are useful in describing a third problem that can arise in connection with generating a mosaic image from a plurality of images of a scene using a moving camera;

FIGS. 6 and 7 are useful in connection with understanding one methodology used by the system depicted in FIG. 1 in connection with correcting the problem described in connection with FIGS. 5A through 6D;

FIG. 8 is a flowchart depicting operations performed by the system in connection with the methodology described in connection with FIGS. 6 and 7;

FIG. 9 is useful in connection with understanding a second methodology used by the system depicted in FIG. 1 in connection with correcting the problem described in connection with FIGS. 5A through 6D;

FIG. 10 is a flowchart depicting operations performed by the system in connection with the methodology described in connection with FIGS. 10;

FIGS. 11A through 11C are useful in connection with operations performed by a system not forming part of the invention, in connection with generating a mosaic of panoramic images; and

FIG. 12 is a flow chart depicting operations performed by a system not forming part of the invention in connection with generating mosaic panoramic images.

## DETAILED DESCRIPTION OF AN ILLUSTRATIVE EMBODIMENT

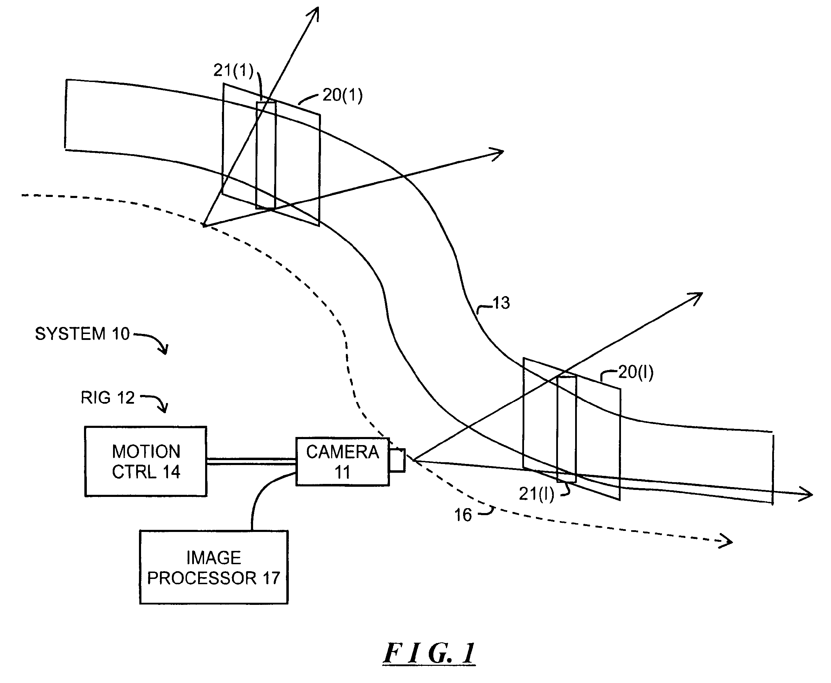

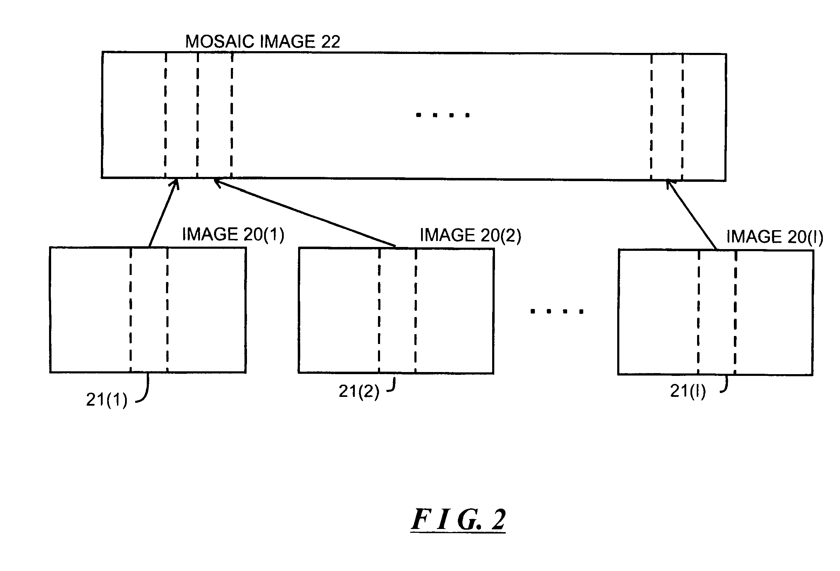

FIG. 1 schematically depicts a system 10 for generating a mosaic image from a series of images recorded by a moving camera, constructed in accordance with the invention. With reference to FIG. 1, system 10 includes a camera 11 that is mounted on a rig 12. The camera 11 may be any type of camera for recording images on any type of recording medium, including, for example, film, an electronic medium such as charge-coupled devices (CCD), or any other medium capable of recording images. The rig 12 facilitates pointing of the camera 11 at a scene 13 to facilitate recording of images thereof. The rig 12 includes a motion control 14 configured to move the camera 11. In moving the camera 11, the motion control can translate the camera 11, rotate it around its axis, or any combination thereof. In one embodiment, it will be assumed that the motion control 14 can translate the camera 11 along a path 16 and rotate the camera during translation. While the camera 11 is being moved, it can record images 20(1),..., 20(I) (generally identified by reference numeral 20(i)) of the scene 13 from a series of successive locations along the path 16. The individual images recorded at the successive locations are provided to an image processor 17 for processing into a unitary mosaic image, as will be generally described in connection with FIG. 2. Preferably the successive images 20(i) will overlap, which will facilitate generation of the mosaic image as described below.

As noted above, the image processor 17 processes the series of individual images to generate a unitary mosaic image. Operations performed by the image processor 17 in connection with that operation will generally be described in connection with FIG. 2. With reference to FIG. 2, the image processor 17 will initially receive two or more images 20(i). Thereafter the image processor 17 will process two individual images, for example, images 20(1) and 20(2) to find overlapping portions 21(1) and 21(2) of the scene generally toward the right and left sides of the respective images 20(1) and 20(2), respectively, and use those corresponding portions 21(1) and 21(2) to align the images 20(1) and 20(2). Given the alignment, portions 21(1) and 21(2) can be defined in images 20(1) and 20(2) such that they can be combined to form a portion of the mosaic image 22. Thereafter, similar operations can be performed in connection with the next image 20(3) in the series and the portion of the mosaic image 22 generated using images 20(1) and 20(2) to further extend the mosaic image 22. These operations can be performed in connection with the remaining images 20(4),..., until all of the images 20(i) have been used to generate the mosaic.

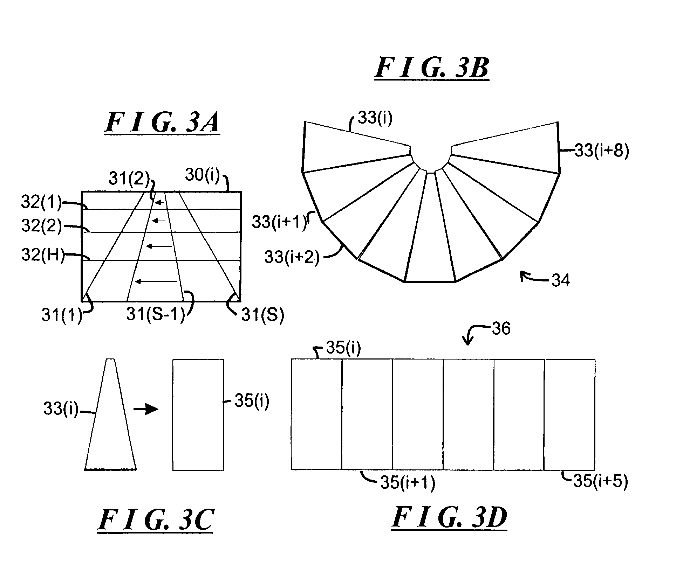

Several problems arise in connection with generation of the mosaic image 21 as described above. One such problem will be described in connection with FIGS. 3A through 3D. As noted above, when the image processor 17 processes two successive individual images 20(1) and 20(2) to mosaic them together, or an individual image 20(i) (i>2) and the previously-generated mosaic image 22, it uses overlapping portions to align the respective images 20(1) and 20(2). The problem described in connection with FIGS. 3A through 3D arises when features that are used to align the individual images do not have a uniform image motion. This problem can, for example, be described in connection with a planar surface that is tilted with respect to the camera 11, so that, for example, the planar surface is parallel to the path 16 along which the camera is translated, but tilted so that the lower portion of the planar surface is closer to the camera 11 and the upper portion of the planar surface farther away from the camera 11. To provide information for aligning the successive individual images when the mosaic image is generated, the planar surface is provided with a series of equi-distant vertical lines.

In that case, each of the individual images will appear as the image 30(i) depicted FIG. 3A, with the vertical lines appearing as slanted lines 31(1) through 31(S) (generally identified by reference numeral 31(s)). Since the lower part of the image 30(i) is of the portion of the planar surface that is closer to the camera 11, and the upper part of the image 30(i) is of the portion of the planar surface that is farther from the camera 11, the vertical lines on the planar surface will be recorded as the slanted lines 31(s). The perspective due to the tilting of the planar surface causes the lines that are to the left of the center of the image 30(i) to be slanted toward the right and the lines that are to the right of the center to be slanted toward the left in the image 30(i). The distance between locations along the path 16 at which images 30(i), 30(i+1),... are recorded will be such as to allow the portions of the scene recorded in the images to overlap so that, for example, slanted line 31(S-1) in image 30(i+1) corresponds to slanted line 31(2) in image 30(i); otherwise stated, the image motion, or motion of objects in the successive images from image 30(i) to image 30(i+1), is such that line 31 (S-1) in image 30(i) corresponds to line 31 (2) in image 30(i-1).

Conventionally, as described above, when a mosaic image 34 is generated using images 30(i) as described above, strips 32(i) from the successive images 30(i) will be used as shown in FIG. 3B. Since line 31(S-1) in image 30(i) corresponds to line 31(2) in the successive image 30(i+1), conventionally in each image 30(i) the strip 33(i) obtained from the image 30(i) for use in the mosaic can be defined by lines 31(2) and 31(S-1) in the image 30(i). Accordingly, when the strips 33(i), 33(i+1) obtained form the two images 30(i) and 30(i+1) would be aligned to form a mosaic as shown in FIG. 3B, with the resulting mosaic being curled. The strength of the curl is, in the case of a rotating camera, a function of the angle between the viewing direction and the rotation axis, and, in the case of a translating camera, a function of the angle with which the planar surface is tilted with respect to the image plane of the camera 11.

As will be described below in greater detail, the problem described above in connection with FIGS. 3A and 3B can be corrected by rectifying the strips 33(i) as shown in FIG. 3C to provide successive rectangular strips 35(i), which, as shown in FIG. 3D, can be mosaiced together to provide a rectified mosaic image 36. Generally, the orientation of the planar surface relative to the image plane of the camera 11 is unknown, but the amount of distortion, if any, that is caused by the orientation can be determined from the optical flow, that is, the change of the position and orientation of respective vertical lines as between successive images. After the amount of distortion has been determined, the image processor 17 can process each of the individual images to correct for the distortion prior to integrating them into the mosaic.

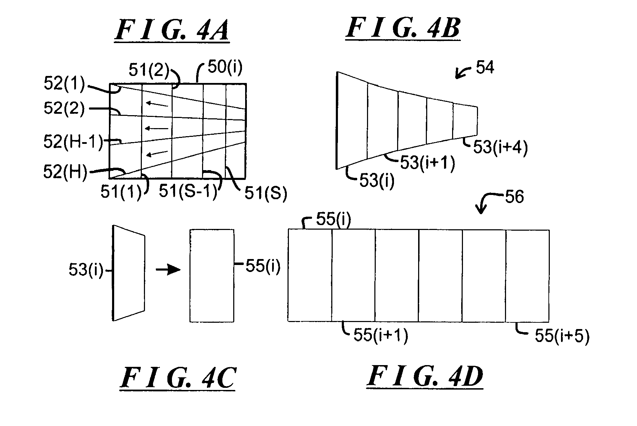

Another problem will be described in connection with FIGS. 4A through 4D. In the situation to be described in connection with FIG. 4, the camera 11 is moving from left to right parallel to a vertical planar surface, and is tilted forward, that is, tilted to the right with respect to the planar surface. In that case, the planar surface is provided with lines running horizontally as well as vertically, and the camera is tilted with respect to the planar surface in such a manner that it points to the right. Accordingly, and with reference to FIG. 4A, an image 50(i) recorded by the camera, the vertical lines 51(1), 51(2),... will remain vertical, but the horizontal lines 52(1), 52(2),... that are above the horizontal center of the image 50(i) will be angled in a downward direction from left to right, while horizontal lines 52(H), 52(H-1),... that are below the horizontal center of the image 50(i) will be angled in an upward direction from left to right. As is the case in connection with image 30(i) (FIG. 3A), line 51(S-1) in image 50(i) corresponds to line 51(2) in image 50(1+1). Thus, in mosaicing a strip 53(i) from an image 50(i), the strip can be defined by vertical lines 51(2) and 51(S-1) on the left and right sides, and, for example, by lines 52(1) and 52(H) at the top and the bottom, in each image 50(i), 50(i+1),.... It will be appreciated that, in matching a strip 53(i+1) from image 50(i+1) to the left edge of a strip 53(i) from the preceding image 50(i), the strip 53(i+1) will be warped so that the respective horizontal lines 52(1), 52(2),...,52(H-1), 52(H) along the left edge of the strip 53(i) will match the same lines 52(1), 52(2),..., 52(H-1), 52(H) along the right edge of the strip 53(i+1). Accordingly, the mosaic image 54 formed from successive strips will taper from left to right. As shown in FIG. 4C, the image processor 17 can rectify this distortion by rectifying each strip 53(i), 53(i+1),... to form rectangular strips 55(i), 55(i+1), with the rectification being such as to make the lines 52(1), 52(2),..., 52(H-1), 52(H) return to a horizontal orientation and mosaic the rectangular strips together to form the mosaic image 56 (FIG. 4D).

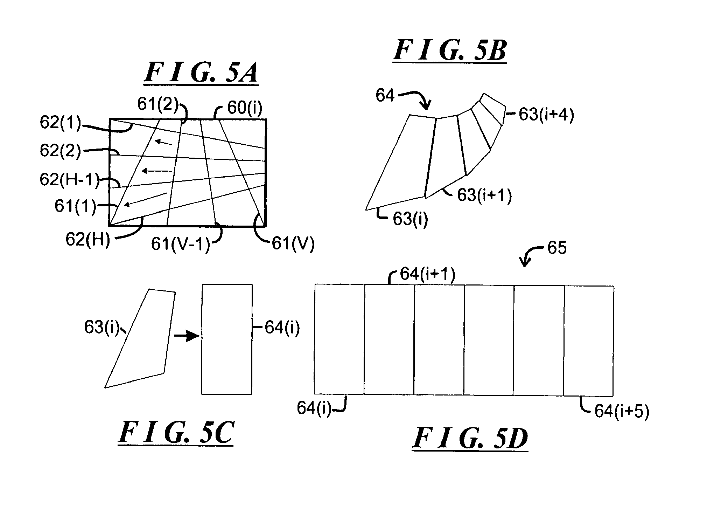

A third problem, which generally is a combination of those described above in connection with FIGS. 3A through 3D and 4A through 4D, will be described in connection with FIGS. 5A through 5D. In the problem to be described in connection with FIGS. 5A through 5D, both the planar surface comprising the scene and the camera 11 recording images of the scene may be tilted. As with the planar surface described above in connection with FIGS. 4A through 4D, the planar surface in this case includes a plurality of vertical and horizontal lines. In that case, each image 60(i) as recorded by the camera will as shown in FIG. 5A, with the region subsumed by the vertical lines 61(1),..., 61(V) (generally identified by reference numeral 61 (v)) tapering vertically from bottom to top (as is the case in the example described above with reference to FIGS. 3A through 3D), and the region subsumed by the horizontal lines 62(1),..., 62(H) (generally identified by reference numeral 62(h)) tapering horizontally from left to right. If the motion of camera 11 as between successive images 60(i), 60(i+1),... is such that the vertical line 61(V-1) in image 60(i) corresponds to the same line in the scene 12 as line 61 (2) in image 60(i+ 1) when the image processor 17 mosaics strips from the successive images 60(i), 60(i+1),... it can select as the strip the region of each image bordered by vertical lines 61(1) and 61(2) and horizontal lines 62(1) and 62(H). In that case, if the strip 63(i) for the mosaic image 64 (reference FIG. 5B) is obtained from image 60(i), since the strip 63(i+1) from image 60(i+1) will be warped so that the length of its left edge corresponds to the length of the right edge of strip 63(i), that strip 63(i+1) will be proportionately smaller and disposed at a different angle than the strip 63(i) in the mosaic image 64. Each subsequent strip 63(i+2),..., will also be proportionately smaller than, and disposed at a corresponding angle to, the previous strip 63(i+1),..., and so the resulting mosaic image 64 will both be curved and taper from left to right. The image processor 17 can rectify this distortion by rectifying each strip 63(i) both horizontally and vertically to form a rectangular strip 64(i) (reference FIG. 5C) prior to mosaicing it to the mosaic image 65 (reference FIG. 5D).

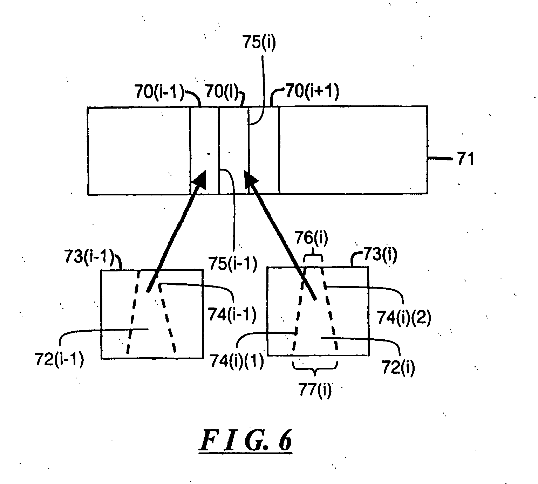

Details of how the image processor 17 generally rectifies distortion using information from apparent motion in successive images will be described in connection with FIGS. 6 through 8. Generally, as will be appreciated from the above, each strip ..., 70(i-1), 70(i), 70(i+1),... in the mosaic image 71 is obtained from a respective strip ..., 72(i-1), 72(i), 72(i+1),... in successive images ..., 73(i-1), 73(i), 73(i+1),... recorded by the camera 11. To fully define the transformation to be used for the rectification, the image processor 17 will need to define the borders of each strip 70(i) in the mosaic image 71, the borders of the regions in the respective images 73(i) that will comprise for the respective strips 72(i) and the mapping transformation from the strip 72(i) to the strip 70(i). To accomplish that, the image motion between successive pairs of images 73(i-1), 73(i) and 73(i), 73(i+1) is determined. Generally, for image 73(i), the image processor 17 defines the region that is to comprise the strip 72(i) to satisfy three conditions, namely:

(i) One border 74(i)(1) of the region should match the border 74(i-1) of the region of image 73(i-1) that is to comprise strip 72(i-1) in the preceding image 73(i-1), which will map to the border 75(i-1) between strips 70(i-1) and 70(i) in the mosaic image 71;

(ii) The border 74(i)(2) of the region that is to comprise the strip 72(i), which will map to the border 75(i) between strips 70(i) and 70(i+1) in the mosaic image 71, is chosen such that the distance between the two borders 74(i)(1) and 74(i)(2) is proportional to the image motion at each border location; this will ensure that the mosaic image 71 is constructed linearly and not curved; and

(iii) The top and bottom borders 76(i) and 77(i) of the region of image 73(i) that is to comprise strip 72(i) should pass through the top and bottom ends of some vertical column in the image 73(i), such as the vertical column at the center of the image 73(i); this will ensure that the strip 70(i) is not expanded or shrunk in the mosaic image 71.

The rectangular strips ..., 70(i-1), 70(i), 70(i+1),,... in the mosaic 71 have a uniform height to provide a mosaiced image 71 of uniform height and to avoid expanding or shrinking the mosaic image 71 vertically. However, the vertical location of the strip 70(i) in the mosaic image 71 changes according to the vertical motion or tilt of the camera 11. The width of the strip 70(i) is determined by the motion of the scene 12 from image to image.

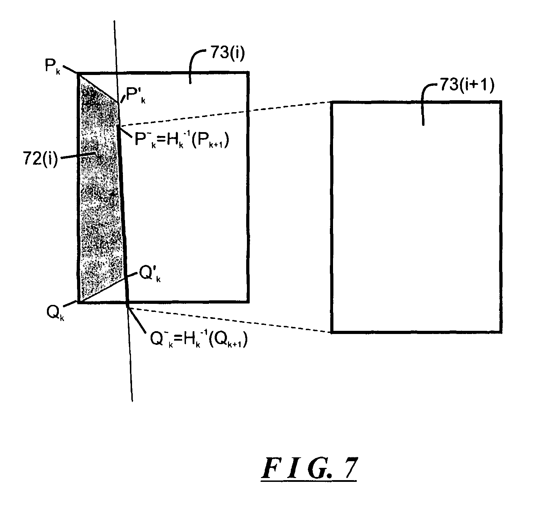

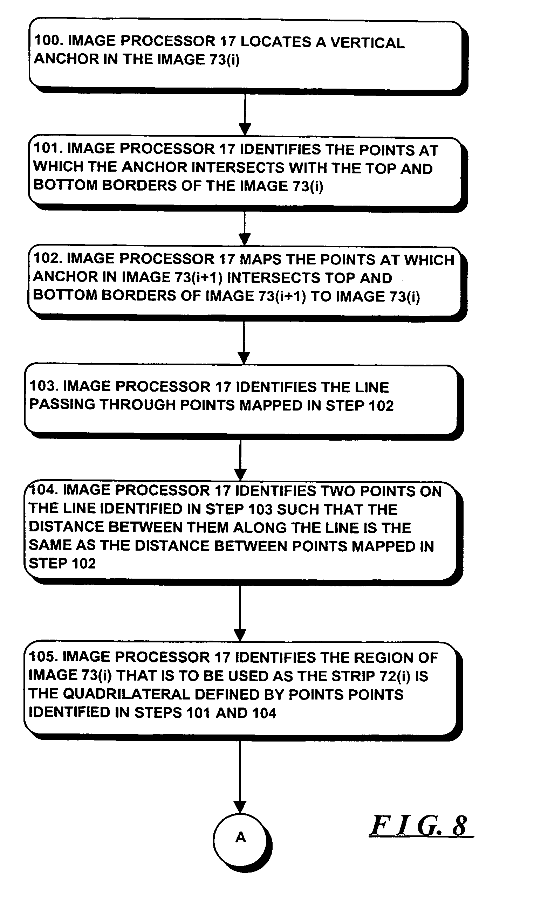

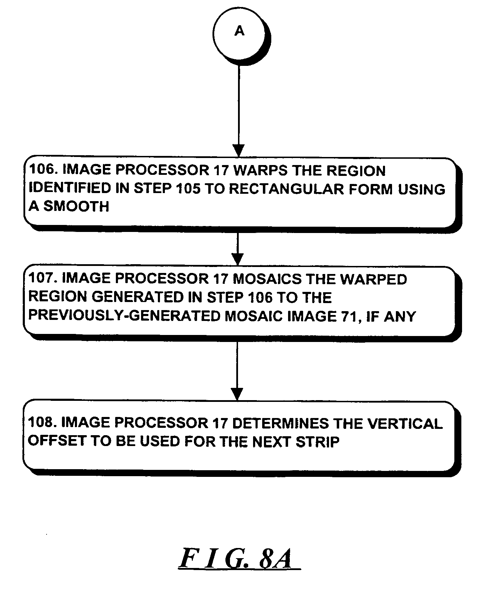

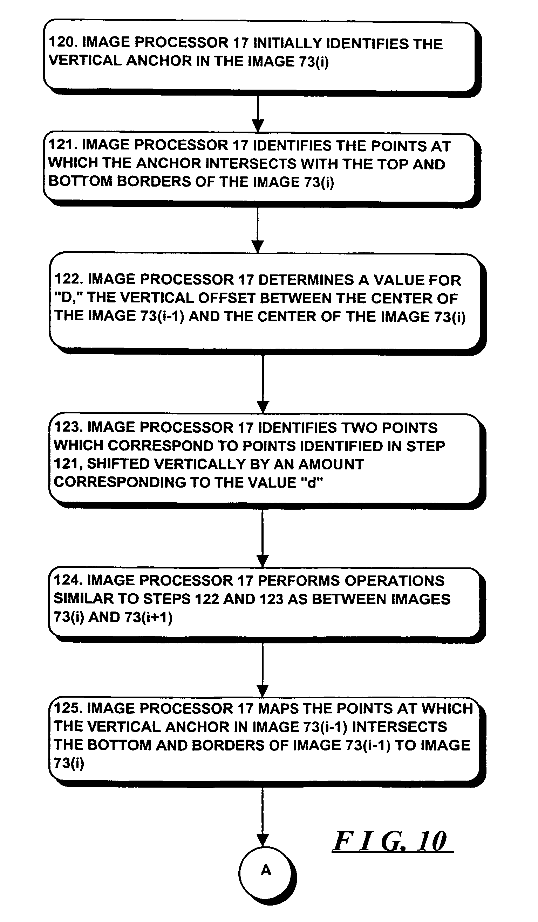

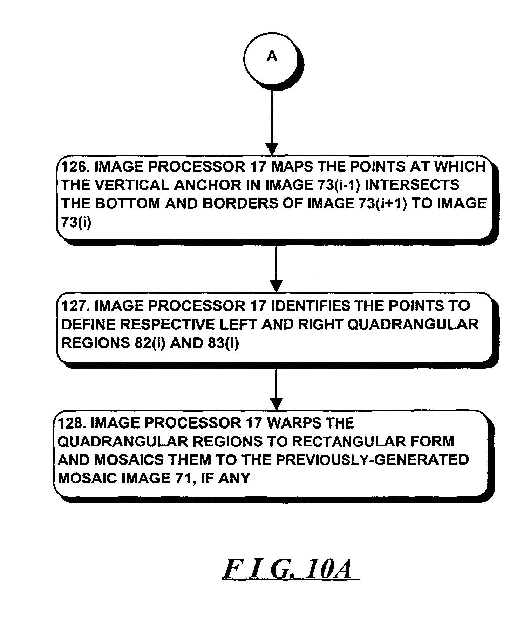

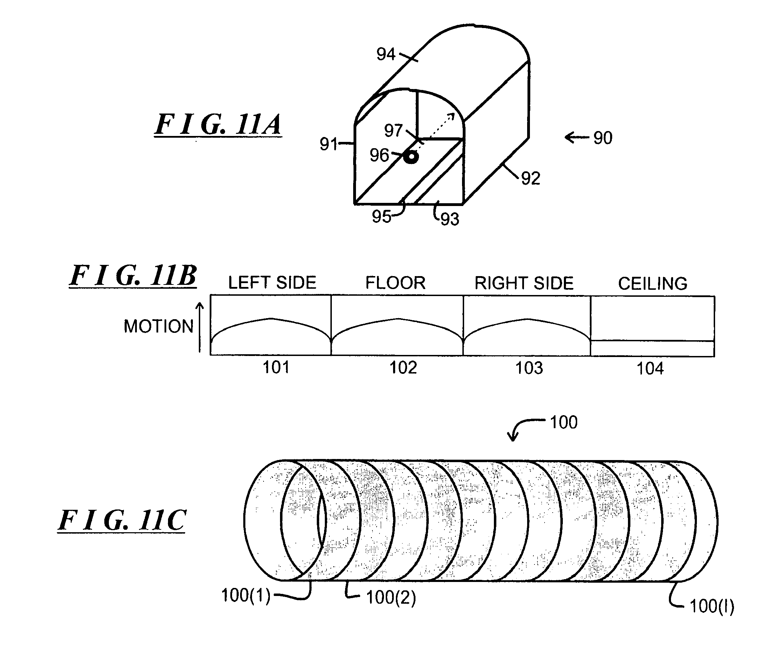

In the case images recorded of a scene comprising a planar surface, or images recorded by a tilted rotating camera, operations performed by the image processor 17 in one embodiment in generating the strip 70(i) to be used in generating the mosaic image 71 will be described in connection with FIG. 7 and the flowchart in FIG. 8. Generally, in the embodiment described in connection with FIGS. 7 and 8, the image processor 17 obtains the strip as defined one side of an vertical anchor. The vertical anchor is a vertical feature in the image that remains invariant under the transformation that warps a strip in the image to a strip in the mosaic. Only transformations that keep the anchor invariant will be considered for warping a strip in the image to a strip in the mosaic. The vertical anchor may be anywhere in the image 73(i), illustratively, the center, the left border, or other column; in the embodiment described in connection with FIGS. 7 and 8, the vertical anchor is selected to be the left border of the image 73(i), and that vertical anchor will also form the left border of the strip 70(i). Another embodiment, in which the strip is defined on two sides of a vertical anchor, will be described below in connection with FIGS. 10 and 11.

With reference to FIGS. 7 and 8, the image processor 17 will initially locate the vertical anchor in the image 73(i) (step 100) and identify the points $P_k$ and $Q_k$ (where index "k" has the same value as index "i") at which the anchor intersects with the top and bottom borders of the image 73(i) (step 101). Using the homography $H_k^{-1}$ between images 73(i+1) and 73(i), the image processor also maps the points $P_{k+1}$ and $Q_{k+1}$ in image 73(i+1) to image 73(i) as points $P_k^-$ and $Q_k^-$, respectively (step 102). It will be appreciated that points $P_{k+1}$ and $Q_{k+1}$ comprise, respectively, the points at which the anchor in image 73(i+1), that is, the left border of the image 73(i), intersects the top and bottom of that image 73(i+1), and so $P_k^- = H_k^{-1}(P_{k+1})$ and $Q_k^- = H_k^{-1}(Q_{k+1})$.

After the image processor 17 has located points $P_k^-$ and $Q_k^-$, it identifies the line $L_k$ passing therethrough (step 103) and then identifies two points $P'_k$ and $Q'_k$ on the line such that the distance between them along the line $L_k$ is the same as the distance between points $P_k^-$ and $Q_k^-$, and their centroid is in the middle row of the image (step 104). The image processor can determine the region of image 73(i) that is to be used as the strip 72(i) is the quadrilateral defined by points $P'_k$, $Q'_k$, $Q_k$ and $P_k$ (step 105) and warp the strip to rectangular form using a smooth (for example, bilinear) interpolation of the coordinates of those points, thereby to generate the strip 70(i) (step 106). It will be appreciated that the use of an interpolation is an approximation of the real transformation, which is unknown, but if the strip 72(i) is relatively narrow, the approximation will suffice. Thereafter, the image processor 17 can mosaic the strip 70(i) to the previously-generated mosaic image 71, if any (step 107).

In addition, the image processor 17 will determine the vertical offset to be used for the next strip 70(i+1) (step 108). In that operation, the image processor will determine the vertical offset as $\left\| \tilde{Q}_k - Q'_k \right\| * \dfrac{h}{\left\| Q'_k - P'_k \right\|}$,

where $\|A\text{-}B\|$ refers to the distance between two points A and B and "h" is the image height.

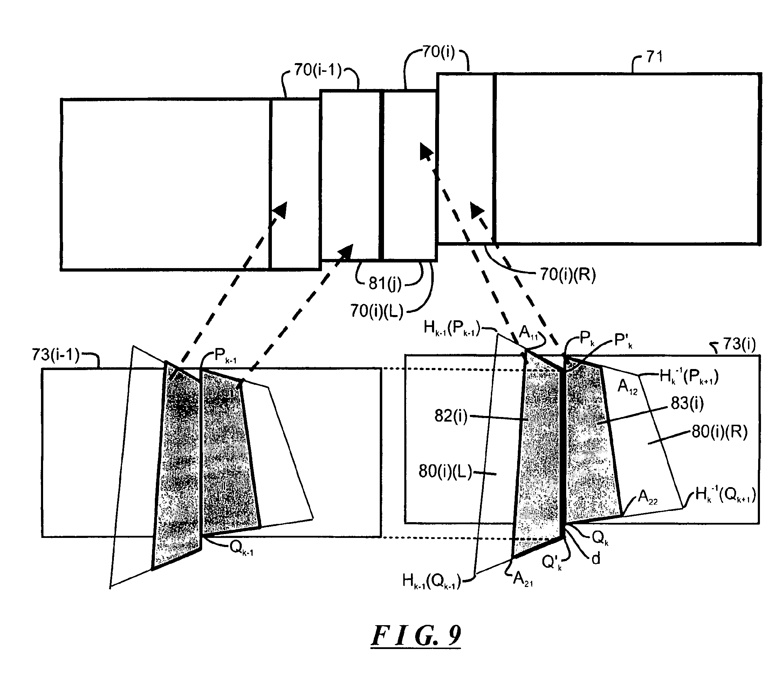

As noted above, a second embodiment, in which the strip is defined on two sides of a vertical anchor, is described in connection with FIGS. 9 and 10. The vertical anchor may be any column in the image 73(i); in one embodiment it is selected to be the center column, since that will reduce lens distortion. In this embodiment, the image processor identifies two regions, approximately symmetric on opposing sides of the center column, both of which be warped to form respective portions of the strip 70(i) to be used in the mosaic image 71. With reference to FIGS. 9 and 10, the image processor 17 will initially identify the vertical anchor in the image 73(i) (step 120) and identify the points $P_k$ and $Q_k$ at which the anchor intersects with the top and bottom borders of the image 73(i) (step 121). Thereafter, the image processor 17 will determine a value for "d," the vertical offset between the point $Q_{k-1}$ that comprises the center of the image 73(i-1), that is, the projection of point $Q_{k-1}$ in image 73, that is, $H_{k-1}(Q_{k-1})$ (step 122), where $H_{k-1}$ is the homography between image 73(i-1) and image 73(i), and identify two points $P'_k$ and $Q'_k$ which correspond to points $P_k$ and $Q_k$ shifted vertically by an amount corresponding to the value "d" (step 123). The image processor 17 will perform operations similar to steps 122 and 123 as between images 73(i) and 73(i+1) using the homography $H_k$ therebetween (step 124).

In addition, the image processor 17, using the homography $H_{k-1}$, maps the points $P_{k-1}$ and $Q_{k-1}$ to image 73(i) as points $H_{k-1}(P_{k-1})$ and $H_{k-1}(Q_{k-1})$, respectively (step 125), and, using the homography $H_{k-1}$, maps points $P'_{k+1}$ and $Q'_{k+1}$ to image 73(i) as points $H^{-1}_k(P'_{k+1})$ and $H^{-1}_k(Q'_{k+1})$ (step 126). The points $H_{k-1}(P_{k-1})$, $P'_k$, $Q'_k$, and $H_{k-1}(Q_{k-1})$ define a left quadrangular region 80(i)(L), and points $P_k$, $H^{-1}_k(P'_{k+1})$, $H^{-1}_k(Q'_{k-1})$ and $Q_k$ define a right quadrangular region 80(i)(R), a portion of each of which will be used in generating respective rectangular portions 81 (i)(L) and 81 (i)(R) that together will be used as the strip for the image 73(i) in the mosaic image 71. Essentially, it will be desired to use left quadrangular region 80(i)(L), along with the right quadrangular region 80(i-1)(R) associated with the previous image 74 (i-1), in connection with a rectangular region 81(j) in the mosaic image 71. Similarly, it will be desired to use the right quadrangular region 80(i)(R), along with the left quadrangular region 80(i+1)(L) associated with the next image 73(i+1), in connection with the next rectangular region 81(j+1) in the mosaic image 71. The size and shape of the respective rectangular regions is somewhat arbitrary. Since both images 73(i-1) and 73(i) are used to provide half of the image to be used in the rectangular region 81(j), it will be appreciated that the points $H_{k-1}(P_{k-1})$, $P'_k$, $Q'_k$, and $H_{k-1}(Q_{k-1})$ that define the left quadrangular region 80(i)(L) will also relate to the points defining the corners of the rectangular region 81 (j), and it will be necessary to find the points $A_{11}$ and $A_{21}$ that relate to the mid-points of the top and bottom of the rectangular region 81 (j), respectively. Accordingly, the portion of quadrangular region 80(i)(L) that will be used in connection with the left-hand portion of strip 70(i) is the quadrangular region 82(i) defined by points $A_{11}$, $P'_k$, $Q'_k$, and $A_{21}$. Similarly, points $P_k$, $H^{-1}_k(P_{k+1})$, $H^{-1}_k(Q_{k-1})$ and $Q_k$ that define the right quadrangular region 80(i)(R) will also relate to the points defining the corners of the rectangular region 81(j+1), and it will be necessary to find the points $A_{12}$ and $A_{22}$ that relate to the mid-points of the top and bottom of the rectangular region 81 (j+1), respectively. Accordingly, the portion of quadrangular region 80(i)(R) that will be used in connection with the left-hand portion of strip 70(i) is the quadrangular region 83(i) defined by points $P_k$, $A_{12}$, $A_{22}$ and $Q_k$. The rectangular regions 81 (j) and 81 (j+1) can both be defined by points UVWX, with points U and V defining the left and right top corners, respectively, and points W and X defining the right and left bottom corners, respectively. In that case the relationship between the left and right quadrangular regions 80(i)(L) and 80(i)(R) will be defined by respective homographies $F_L$ and $F_R$.

Accordingly, following step 126, the image processor 17 will identify the points $A_{11}$, $A_{21}$, $A_{12}$ and $A_{22}$ as

$$A_{11} = F_L\left(\frac{U+V}{2}\right), \quad A_{21} = F_L\left(\frac{W+X}{2}\right)$$

$$A_{12} = F_R\left(\frac{U+V}{2}\right), \quad A_{22} = F_R\left(\frac{W+X}{2}\right) \tag{1}$$

(step 127), and warp the portion of the quadrangular region defined by points $A_{11}$, $P'_k$, $Q'_k$ and $A_{21}$ to the right portion of the rectangular region 81 (j) and the portion of the quadrangular region defined by points $A_{12}$, $P_k$, $Q_k$ and $A_{22}$ to the left portion of the rectangular region 81(j+1) by a smooth (for example, bilinear) interpolation thereby to provide respective rectangular portions 70(i)(L) and 70(i)(R) of the strip 70(i) associated with image 73(i), with the rectangular portion 81(i)(R) being vertically offset from rectangular portion 81 (i)(L) by the value "d" determined in step 122 (step 128).

In the system 10 as described above in connection with FIGS. 1 through 10, the camera 11 has been one that records images in a particular direction. As an example not forming part of the invention, the image processor 17 can also generate a mosaic of a plurality of panoramic images. Typically, a panoramic image is generated from a plurality of images recorded from a number of angular orientations around a common axis, which images are mosaiced together to provide a single panoramic image of the scene surrounding the axis. The panoramic image so generated is typically the full 360 degree circle surrounding the axis, or a substantial part thereof. The images that are used in generating the panoramic image may be recorded by a single camera that is rotated around the axis to facilitate recording of the images from the requisite plurality of angular orientations, or by a plurality of cameras disposed at the requisite angular orientations. A panoramic image can also be obtained by a single camera with a very wide field of view, which may be provided by a very wide angle lens, a combination of lenses and mirrors, or other arrangements as will be apparent to those skilled in the art. The panoramic image may be cylindrical or alternatively it may be flat. In accordance with this example not forming part of the invention, the images are recorded to facilitate generation of a plurality of panoramic images recorded at successive locations along the axis, with the panoramic images overlapping such that the image processor 17 can mosaic them together along the direction of the axis.

This aspect will be described in greater detail in connection with FIGS. 11A through 12. With reference to FIG. 11A, that FIG. schematically depicts a train tunnel 90 having left and right sides 91 and 92, a floor 93 and a ceiling 94. The left and right sides 91 and 92 and the floor are planar surfaces, and the ceiling 94 is arched. A pair of tracks 95 is disposed on the floor to facilitate traversal of the tunnel by a train (not shown). A panoramic camera 96, comprising, for example, a plurality of individual cameras disposed around a common axis 97, which extends generally parallel to the length of the tunnel, records images along the axis from a plurality of angular orientations. The camera 96 is moved along the axis 97 to facilitate recording of images from which a series of panoramic images along the axis 97 can be generated, which series can be processed as described below in connection with FIG. 13, and the processed panoramic images 100(1), 100(2),... mosaiced together to form a single mosaic panoramic image 100 (FIG. 11C).

As noted above, the tunnel 90 comprises left and right sides 91 and 92, a floor 93 and a ceiling 94. In the following, it will be assumed that the surface of the ceiling 94 is cylindrical with an axis corresponding to the axis 97. In addition, it will be assumed that the distance from axis 97 to each of the left and right sides 91 and 92 and floor 93 is smallest at the center of the left and right sides and floor, and largest at the corners. In that case, the image motion, that is, the apparent motion of features and objects in the images as between panoramic images will be as depicted in the graph depicted FIG. 11B. With reference to FIG. 11B, since, for each of the left and right sides 91 and 92 and floor 93, the distance from the axis 97 thereto increases from the center to the two corners, the image motion decreases from the center to the two corners, as shown in left, bottom and right graph segments 101, 102 and 103 in FIG. 11B. On the other hand, since, for the ceiling 94, the distance from the axis is constant, the image motion will also be constant, as shown in the top graph segment 104 in FIG. 11B. If the internal parameters of the camera 96 are known it will be appreciated that the shape of the tunnel 90, to a scale factor, can readily be determined using the image motion. In addition, given certain other information, such as the distance from the axis 97 to the tracks 95, the scale factor can also be determined.

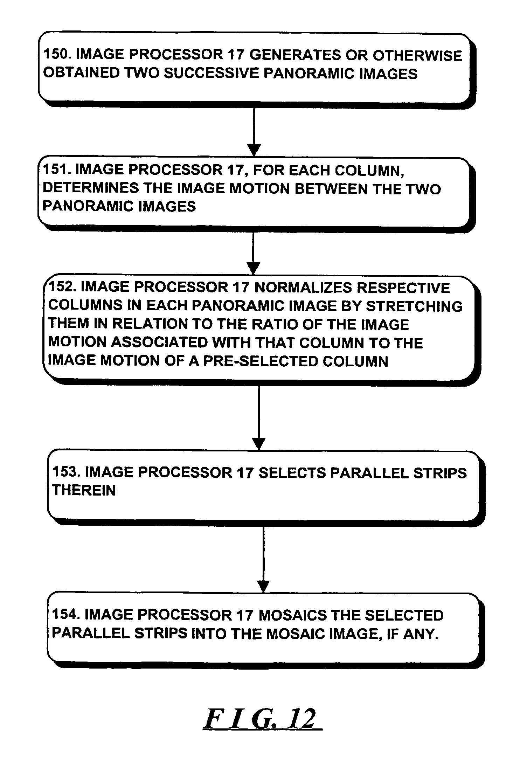

The image processor 17, in generating a mosaic panoramic image 101 from the individual panoramic images 100(1), 100(2),..., will process the individual panoramic images to correct for the differences in the image motion. Operations performed by the image processor 17 in generating a mosaic panorama image 100 will be described in connection with the flow chart in FIG. 11. With reference to FIG. 12, after the image processor 17 has generated or otherwise obtained two successive panoramic images 100(i), 100(i+1) that are to be mosaiced together (step 150), for each column it determines the image motion between the two panoramic images (step 151). The image motion as determined by the image processor 17 may have a motion profile similar to that described above in connection with FIG. 3, with image motion of regions relatively close to the camera being relatively high and image motion of regions further away being relatively low.

Thereafter, the image processor 17 normalizes respective columns in each panoramic image 100(i), 100(i+1) by stretching them in relation to the ratio of the image motion associated with that column to the image motion of a pre-selected column (step 152), each column comprising the series of picture elements in the direction parallel to the axis 97. The pre-selected column may be the column with the highest motion, or any other selected column in the panoramic image. Preferably, in performing step 152, the image processor 17 will leave at least one row or set of columns unchanged. If, for example, the image processor 17 does not normalize the columns of the portion of the panoramic image relating to the floor 91, in the resulting mosaic panoramic image the floor will appear to be flat and the ceiling 94 will appear to be curved. On the other hand, if the image processor 17 does not normalize the columns of the portion of the panoramic image relating to the ceiling 94, in the resulting mosaic panoramic image the ceiling will appear to be flat and the floor will appear to be curved. Similarly, if the image processor does not normalize the columns of the portion of the panoramic image relating to the left and/or right sides, in the mosaic panoramic image the left and/or right sides will appear to be

# EP 1 234 278 B1

flat and both the ceiling and floor will appear to be curved.

After the image processor 17 has normalized the respective panoramic images 100(i), 100(i+1) (step 152), it will select parallel strips therein (step 153) and mosaic the parallel strips into the mosaic image 100 (step 154).

The system 10 provides a number of advantages. In one aspect, the system provides an arrangement that can generate mosaic images of scenes including tilted surfaces using a translated camera that is pointed toward the scene generally sideways. In this aspect, the camera may be translated in a direction that is parallel to the tilted surface and pointed directly thereat, that is, perpendicular to the translation direction (reference FIGS. 3A through 3D). Alternatively, and more generally, the camera may be pointed in a direction that is tilted with respect to the direction of motion (reference FIGS. 7A through 10).

In an example not forming part of the invention the system 10 can generate a mosaic of panoramic images (reference FIGS. 11A through 12) and in connection therewith can determine the shapes of surfaces in the mosaic images. In connection with this example, although the system 10 was described as generating a mosaic of panoramic images of a train tunnel, it will be appreciated that the system can generate such a mosaic panoramic image of a variety of kinds of scenes, including but not limited to water or sewer pipes, corridors and hallways, and the like.

It will be appreciated that a number of modifications may be made to the system 10 as described above. For example, it will be appreciated that, if the camera 11 is translated, it may be translated in any direction with respect to the scene 13. In addition, although the system 10 has been described as performing operations in connection with a scene 13 that has vertical and/or horizontal lines, it will be appreciated that the operations can be performed in connection with any pattern or set of points that appear along such lines.

It will be appreciated that a system in accordance with the invention can be constructed in whole or in part from special purpose hardware or a general purpose computer system, or any combination thereof, any portion of which may be controlled by a suitable program. Any program may in whole or in part comprise part of or be stored on the system in a conventional manner, or it may in whole or in part be provided in to the system over a network or other mechanism for transferring information in a conventional manner. In addition, it will be appreciated that the system may be operated and/or otherwise controlled by means of information provided by an operator using operator input elements (not shown) which may be connected directly to the system or which may transfer the information to the system over a network or other mechanism for transferring information in a conventional manner.

The foregoing description has been limited to a specific embodiment of this invention. It will be apparent, however, that various variations and modifications may be made to the invention, with the attainment of some or all of the advantages of the invention.

The scope of the invention, is defined by the appended claims.

## Claims

1.   A system for generating a mosaic image from a plurality of individual images comprising:

A. a quadrangular region defining module configured to define in at least one of said individual images a quadrangular region that is not already rectangular in relation to two points on a vertical anchor in the one individual image and in relation to mappings of two points on a vertical anchor in at least one other individual image into said one individual image;
B. a warping module configured to warp the quadrangular region to a rectangular region; and
C. a mosaicing module configured to mosaic at least the rectangular regions to the mosaic image;
wherein each vertical anchor is a vertical image feature that remains invariant under the warping of the quadrangular region of its respective image.

2.   The system according to claim 1 in which said two points on said vertical anchor in said one individual image comprise points at which the vertical anchor intersects upper and lower borders of said one individual image.

3.   The system according to claim 1 in which the warping module is configured to smoothly interpolate between said quadrangular region and said rectangular region.

4.   The system according to claim 1 in which said quadrangular region defining module includes:

A. a first vertical anchor point identifying module configured to identify two points on the vertical anchor in said one individual image;
B. a second vertical anchor point identifying module configured to identify two points in said one individual image at which the two points on the vertical anchor in said at least one other individual image map to said one individual image;

C. a first line segment determining module configured to determine a line segment between the two points in said one individual image at which the two points on the vertical anchor in said at least one other individual image map to said one individual image; and

D. a second line segment determining module configured to determine a second line segment along a line defined by the first line segment, the second line segment being such that the distance between the end points corresponds to the distance between the end points of the first line segment and positioned along the line such that the centroid of the end points of the second line segment corresponds to the vertical center of the one image, the quadrangular region corresponding to the two points on the vertical anchor in said one individual image and the end points of said second line segment.

5. The system according to claim 4 further including a vertical offset value generating module configured to generate an offset value for use in the mosaicing step for a rectangular region generated for said other individual image.

6. The system according to claim 1 in which the quadrangular region defining module is configured to define two quadrangular regions on opposing sides of the vertical anchor, each in relation to mappings of two points on a vertical anchor in at least two other individual images into said one individual image.

7. The system according to claim 6 in which the quadrangular region defining module is configured to define a left quadrangular region in relation to (i) mappings of the two points on the vertical anchor in a left individual image into said one individual image, and (ii) two points on the vertical anchor in said one individual image, shifted vertically in relation to a vertical offset between the center of the one individual image and the mapping of the center of the left individual image to the one individual image.

8. The system according to claim 6 in which the quadrangular region defining module is configured to define a right quadrangular region in relation to (i) mappings of the two points on the vertical anchor in a left individual image into said one individual image and (ii) said two points on the vertical anchor in said one individual image.

9. A computer-implemented method of generating a mosaic image from a plurality of individual images comprising the steps of :

A. a quadrangular region defining step in which, in one individual image a quadrangular region that is not already rectangular is defined in relation to two points on a vertical anchor in said one individual image and mappings of two points on a vertical anchor in at least one other individual image into said one individual image;

B. a warping step in which the quadrangular region is warped to a rectangular region; and

C. a mosaicing step in which the quadrangular region is mosaiced to the mosaic image;

wherein each vertical anchor is a vertical image feature that remains invariant under the warping of the quadrangular region of its respective image.

10. The method according to claim 9 in which said two points on said vertical anchor in said one individual image comprise points at which the vertical anchor intersects upper and lower borders of said one individual image.

11. The method according to claim 9 in which the warping step includes the step of smoothly interpolating between said quadrangular region and said rectangular region.

12. The method according to claim 9 in which said quadrangular region defining step includes the steps of :

A. identifying the two points on the vertical anchor in said one individual image;

B. identifying two points in said one individual image at which the two points on the vertical anchor in said at least one other individual image map to said one individual image ;

C. determining a line segment between the two points in said one individual image at which the two points on the vertical anchor in said at least one other individual image map to said one individual image; and

D. determining a second line segment along a line defined by the first line segment, the second line segment being such that the distance between the end points corresponds to the distance between the end points of the first line segment and positioned along the line such that the centroid of the end points of the second line segment corresponds to the vertical center of the one image, the quadrangular region corresponding to the two points on the vertical anchor in said one individual image and the end points of said second line segment.

**13.** The method according to claim 12 further including a vertical offset value generating step in which an offset value is generated for use in the mosaicing step for a rectangular region generated for said other individual image.

**14.** The method according to claim 9 in which the quadrangular region defining step includes the step of defining two quadrangular regions on opposing sides of the vertical anchor, each in relation to mappings of two points on a vertical anchor in at least two other individual images into said one individual image.

**15.** The method according to claim 14 in which the step of defining two quadrangular regions includes a left quadrangular defining step in which a left quadrangular region is defined in relation to (i) mappings of the two points on the vertical anchor in a left individual image into said one individual image, and (ii) two points on the vertical anchor in said one individual image, shifted vertically in relation to a vertical offset between the center of the one individual image and the mapping of the center of the left individual image to the one individual image.

**16.** The method according to claim 15 in which the step of defining two quadrangular regions includes a right quadrangular defining step in which a right quadrangular region is defined in relation to (i) mappings of the two points on the vertical anchor in a left individual image into said one individual image and (ii) said two points on the vertical anchor in said one individual image.

**17.** A computer program comprising computer program code means for performing all the steps of any one of claims 9 to 16 when said program is run on a computer.

**18.** The computer program as claimed in claim 17 embodied on a computer readable medium.

**Patentansprüche**

**1.** System zur Erzeugung eines Mosaikbildes aus einer Vielzahl von Einzelbildern, umfassend:

A. einen viereckigen Bereich definierendes Modul, welches ausgestaltet ist, um in mindestens einem der besagten Einzelbilder einen viereckigen Bereich zu definieren, der nicht bereits rechteckig ist in Bezug auf zwei Punkte auf einem vertikalen Anker in dem einen Einzelbild und in Bezug auf Abbildungen von zwei Punkten auf einem vertikalen Anker in mindestens einem anderen Einzelbild in das besagte eine Einzelbild,
B. ein Verzerrungsmodul, welches ausgestaltet ist, um den viereckigen Bereich auf einen rechteckigen Bereich zu verformen, und
C. ein Mosaikbildungsmodul, welches ausgestaltet ist, um mindestens die rechteckigen Bereiche zu einem Mosaikbild zusammenzusetzen, wobei jeder vertikale Anker ein vertikales Bildmerkmal ist, welches unter der Verformung des viereckigen Bereiches seines jeweiligen Bildes invariant verbleibt.

**2.** System gemäss Anspruch 1, bei dem die besagten zwei Punkte auf dem besagten vertikalen Anker in dem besagten einen Einzelbild Punkte umfassen, an denen der vertikale Anker obere und untere Grenzen des besagten einen Einzelbildes schneidet.

**3.** System gemäss Anspruch 1, bei dem das Verformungsmodul so ausgestaltet ist, um in glatter Weise zwischen dem besagten viereckigen Bereich und dem besagten rechteckigen Bereich zu interpolieren.

**4.** System gemäss Anspruch 1, bei dem das besagte den viereckigen Bereich definierende Modul umfasst:

A. einen ersten vertikalen Ankerpunkt identifizierendes Modul, welches ausgestaltet ist, um zwei Punkte auf dem vertikalen Anker in den besagten ein Einzelbild zu identifizieren,
B. einen zweiten vertikalen Ankerpunkt identifizierendes Modul, welches ausgestaltet ist, um zwei Punkte in dem besagten einen Einzelbild zu identifizieren, an dem die zwei Punkte auf dem vertikalen Anker in dem besagten mindestens einem anderen Einzelbild auf das besagte eine Einzelbild abgebildet werden,
C. ein erstes Liniensegment bestimmendes Modul, welches ausgestaltet ist, um ein Liniensegment zwischen zwei Punkten in dem besagten einem Einzelbild zu bestimmen, an dem die zwei Punkte auf dem vertikalen Anker in dem besagten mindestens einen anderen Einzelbild auf das besagte eine Einzelbild abgebildet werden, und
D. ein zweites Liniensegment bestimmendes Modul, welches ausgestaltet ist, um ein zweites Liniensegment entlang einer Linie zu bestimmen, die durch das erste Liniensegment definiert ist, wobei das zweite Liniensegment dergestalt ist, dass der Abstand zwischen den Endpunkten dem Abstand zwischen den Endpunkten des ersten Liniensegments entspricht und entlang der Linie positioniert ist, sodass der Schwerpunkt der Endpunkte des zweiten Liniensegmentes dem vertikalen Zentrum des einen Bildes entspricht, wobei der viereckige Bereich den zwei Punkten auf dem vertikalen Anker in dem besagten einen Einzelbild und den Endpunkten des zweiten besagten Liniensegmentes entspricht.

**5.** System gemäss Anspruch 4, weiterhin umfassend, einen vertikalen Versatzwert erzeugendes Modul, welches ausgestaltet ist, um einen Versatzwert zur Verwendung in dem Mosaik bildenden Schritt für einen viereckigen Bereich zu erzeugen, welcher für das besagte andere Einzelbild erzeugt worden ist.

**6.** System gemäss Anspruch 1, bei dem das den viereckige Bereich definierende Modul ausgestaltet ist, um zwei viereckige Bereiche auf gegenüberliegenden Seiten des vertikalen Ankers zu definieren, jeder in Bezug auf Abbildungen von zwei Punkten auf einem vertikalen Anker in mindestens zwei anderen Einzelbildern in das besagte eine Einzelbild.

**7.** System gemäss Anspruch 6, bei dem das den viereckigen Bereich definierende Modul ausgestaltet ist, um ein linken viereckigen Bereich in Bezug auf (i) Abbildungen von zwei Punkten auf den vertikalen Anker in einem linken Einzelbild in das besagte eine Einzelbild zu definieren, und (ii) in Bezug auf Abbildungen von zwei Punkten auf den vertikalen Anker in das besagte eine Einzelbild zu definieren, vertikal verschoben in Bezug auf einen vertikalen Versatz zwischen dem Zentrum des einen Einzelbildes und der Abbildung des Zentrums des linken Einzelbildes auf das eine Einzelbild.

**8.** System gemäss Anspruch 6, bei dem das den viereckigen Bereich definierende Modul ausgestaltet ist, um einen rechten viereckigen Bereich in Bezug auf (i) Abbildungen von zwei Punkten auf den vertikalen Anker in ein linkes Einzelbild in das besagte eine Einzelbild zu definieren und (ii) um die besagten zwei Punkte auf dem vertikalen Anker in dem besagten einen Einzelbild zu definieren.

**9.** Computergestütztes Verfahren zum Erzeugen eines Mosaikbildes aus einer Vielzahl von Einzelbildern, umfassend die Schritte von:

A. einen viereckigen Bereich definierenden Schritt, in dem in einem Einzelbild ein viereckiger Bereich, der nicht bereits rechteckig ist, in Bezug auf zwei Punkte auf einem vertikalen Anker in dem einen Einzelbild und in Bezug auf Abbildungen von zwei Punkten auf einem vertikalen Anker in mindestens einem anderen Einzelbild in das besagte eine Einzelbild definiert wird,

B. ein Verzerrungsschritt, in dem der viereckige Bereich auf einen rechteckigen Bereich verformt wird, und

C. ein Mosaikbildungsschritt, in dem mindestens der rechteckige Bereich zu dem Mosaikbild zusammengesetzt wird, wobei jeder vertikale Anker ein vertikales Bildmerkmal ist, welches unter der Verformung des viereckigen Bereiches seines jeweiligen Bildes invariant verbleibt.

**10.** Verfahren gemäss Anspruch 9, bei dem die besagten zwei Punkte auf dem besagten vertikalen Anker in dem besagten einen Einzelbild Punkte umfassen, an denen der vertikale Anker obere und untere Grenzen des besagten einen Einzelbildes schneidet.

**11.** Verfahren gemäss Anspruch 9, bei dem der Verformungsschritt den Schritt des glatten Interpolierens zwischen dem besagten viereckigen Bereich und dem besagten rechteckigen Bereich umfasst.

**12.** Verfahren gemäss Anspruch 9, bei dem der den besagten den viereckigen Bereich definierende Schritt die Schritte umfasst:

A. das Identifizieren der zwei Punkte auf dem vertikalen Anker in dem besagten einen Einzelbild,

B. das Identifizieren der zwei Punkte in dem besagten einen Einzelbild, an dem die zwei Punkte auf dem vertikalen Anker in dem besagten mindestens einem anderen Einzelbild auf das besagte eine Einzelbild abgebildet werden,

C. das Bestimmen eines Liniensegmentes zwischen zwei Punkten in dem besagten einem Einzelbild, an dem die zwei Punkte auf dem vertikalen Anker in dem besagten mindestens einen anderen Einzelbild auf das besagte eine Einzelbild abgebildet werden, und

D. das Bestimmen eines zweiten Liniensegmentes entlang einer Linie, die durch das erste Liniensegment definiert ist, wobei das zweite Liniensegment dergestalt ist, dass der Abstand zwischen den Endpunkten dem Abstand zwischen den Endpunkten des ersten Liniensegments entspricht und entlang der Linie positioniert ist, sodass der Schwerpunkt der Endpunkte des zweiten Liniensegmentes dem vertikalen Zentrum des einen Bildes entspricht, wobei der viereckige Bereich den zwei Punkten auf dem vertikalen Anker in dem besagten einen Einzelbild und den Endpunkten des zweiten besagten Liniensegmentes entspricht.

**13.** Verfahren gemäss Anspruch 12, weiterhin umfassend, einen einen vertikalen Versatzwert erzeugenden Schritt, in dem ein Versatzwert zur Verwendung in dem Mosaik bildenden Schritt für einen viereckigen Bereich erzeugt wird, welcher für das besagte andere Einzelbild erzeugt worden ist.

**14.** Verfahren gemäss Anspruch 9, bei dem der den viereckige Bereich definierende Schritt den Schritt umfasst, zwei viereckige Bereiche auf gegenüberliegenden Seiten des vertikalen Ankers zu definieren, jeder in Bezug auf Abbildungen von zwei Punkten auf einem vertikalen Anker in mindestens zwei anderen Einzelbildern in das besagte eine Einzelbild, zu definieren.

**15.** Verfahren gemäss Anspruch 14, bei dem der Schritt des Definierens der zwei viereckigen Bereiche einen einen linken viereckigen Bereich definierenden Schritt umfasst, in dem ein linker viereckiger Bereich definiert wird (i) in Bezug auf Abbildungen von zwei Punkten auf den vertikalen Anker in einem linken Einzelbild in das besagte eine Einzelbild, und (ii) in Bezug auf Abbildungen von zwei Punkten auf den vertikalen Anker in das besagte eine Einzelbild, vertikal verschoben in Bezug auf einen vertikalen Versatz zwischen dem Zentrum des einen Einzelbildes und der Abbildung des Zentrums des linken Einzelbildes auf das eine Einzelbild.

**16.** Verfahren gemäss Anspruch 15, bei dem der zwei viereckige Bereiche definierende Schritt einen einen rechten viereckigen Bereich definierenden Schritt umfasst, in dem ein rechter viereckiger Bereich definiert wird (i) in Bezug auf Abbildungen von zwei Punkten auf den vertikalen Anker in ein linkes individuelles Bild in das besagte eine Einzelbild und (ii) um die besagten zwei Punkte auf dem vertikalen Anker in dem besagten einen Einzelbild.

**17.** Computerprogramm umfassend Computerprogrammcodemittel zur Durchführung aller Schritte von einem der Ansprüche 9 bis 16, wenn das besagte Programm auf einem Computer ausgeführt wird.

**18.** Computerprogramm gemäss Anspruch 17, enthalten auf einem computerlesbaren Medium.

**Revendications**

**1.** Système pour générer une image mosaïque à partir d'une pluralité d'images individuelles, comprenant:

A. un module définissant une zone quadrangulaire, qui est adapté pour définir une zone quadrangulaire dans au moins une desdites images individuelles, qui n'est pas déjà rectangulaire par rapport à deux points sur une ancre verticale dans ladite une image individuelle et par rapport aux applications de deux points sur une ancre verticale dans au moins une autre image individuelle dans ladite une image individuelle,
B. un module de déformation, qui est adapté pour déformer une zone quadrangulaire dans une zone rectangulaire, et
C. un module de création de mosaïque, qui est adapté pour composer au moins les zones rectangulaires dans une image mosaïque, où chaque ancre verticale est une caractéristique d'image verticale, qui reste invariante sous la déformation de la zone quadrangulaire de son image respective.

**2.** Système selon la revendication 1, où lesdits deux points sur ladite ancre verticale dans ladite une image individuelle comprennent des points, où l'ancre verticale coupe des limites supérieures et inférieures de ladite une image individuelle.

**3.** Système selon la revendication 1, où le module de déformation est adapté pour interpoler d'une manière régulière entre ladite zone quadrangulaire et ladite zone rectangulaire.

**4.** Système selon la revendication 1, où ledit module définissant la zone quadrangulaire comprend:

A. un module identifiant un premier point d'ancre verticale, qui est adapté pour identifier deux points sur l'ancre verticale dans ladite une image individuelle,
B. un module identifiant un deuxième point d'ancre verticale, qui est adapté pour identifier deux points dans ladite une image individuelle, où les deux points sont reproduits sur l'ancre verticale dans ladite au moins une autre image individuelle sur ladite une image individuelle,

C. un module déterminant un premier segment de ligne, qui est adapté pour déterminer un segment de ligne entre les deux points dans ladite une image individuelle, où les deux points sont reproduits sur l'ancre verticale dans ladite au moins une autre image individuelle sur ladite une image individuelle, et

D. un module déterminant un deuxième segment de ligne, qui est adapté pour déterminer un deuxième segment de ligne le long d'une ligne, qui est défini par le premier segment de ligne, où le deuxième segment de ligne est tel que la distance entre les points extrêmes correspond à la distance entre les points extrêmes du premier segment de ligne et est positionné le long de la ligne tel que le centre de gravité des points extrêmes du deuxième segment de ligne correspond au centre vertical de l'une image, la zone quadrangulaire correspondent aux deux points sur l'ancre verticale dans ladite une image individuelle et les points extrêmes dudit deuxième segment de ligne.

**5.** Système selon la revendication 4, aussi comprenant un module qui génère une valeur d'offset verticale, qui est adapté pour générer une valeur d'offset pour une utilisation dans l'étape de création de mosaïque pour générer une zone quadrangulaire, qui a été produite pour ladite autre image individuelle.

**6.** Système selon la revendication 1, où le module définissant la zone quadrangulaire est adapté pour définir deux zones quadrangulaires sur des faces opposées de l'ancre verticale, chacune par rapport aux applications de deux points sur une ancre verticale dans au moins deux autre images individuelles dans ladite une image individuelle.

**7.** Système selon la revendication 6, où le module définissant la zone quadrangulaire est adapté pour définir une zone quadrangulaire à gauche par rapport (i) aux applications des deux points sur l'ancre verticale dans une image individuelle de gauche dans ladite une image individuelle, et (ii) des deux points sur l'ancre verticale dans ladite une image individuelle, déplacés d'une manière verticale par rapport à un offset vertical entre le centre de l'une image individuelle et l'application du centre de l'image individuelle de gauche sur ladite une image individuelle.

**8.** Système selon la revendication 6, où le module définissant la zone quadrangulaire est adapté pour définir une zone quadrangulaire à droite par rapport (i) aux applications des deux points sur l'ancre verticale dans une image individuelle à gauche dans ladite une image individuelle et (ii) pour lesdits deux points sur l'ancre verticale dans ladite une image individuelle.

**9.** Procédé mise en oeuvre dans un ordinateur pour générer une image mosaïque d'une pluralité d'images individuelles, comprenant les étapes:

A. une étape définissant une zone quadrangulaire, dans laquelle dans une image individuelle une zone quadrangulaire, qui n'est pas déjà rectangulaire, par rapport aux deux points sur une ancre verticale dans ladite une image individuelle et par rapport aux applications des deux points sur une ancre verticale dans au moins une autre image individuelle dans ladite une image individuelle,

B. une étape de déformation, dans laquelle la zone quadrangulaire est déformée dans une zone rectangulaire, et

C. une étape de création d'une mosaïque, dans laquelle au moins la zone rectangulaire est composée dans cette image mosaïque, où chaque ancre verticale est une caractéristique d'image verticale, laquelle reste invariante sous la déformation de la zone quadrangulaire de son image respective.

**10.** Procédé selon la revendication 9, où lesdits deux points sur ladite ancre verticale dans ladite une image individuelle comprennent des points, où l'ancre verticale coupe des limites supérieures et inferieures de ladite une image individuelle.

**11.** Procédé selon la revendication 9, où l'étape de déformation comprend l'étape d'interpolation régulière entre ladite zone quadrangulaire et ladite zone rectangulaire.

**12.** Procédé selon la revendication 9, où l'étape définissant ladite zone quadrangulaire comprend les étapes:

A. identifier lesdits deux points sur l'ancre verticale dans ladite une image individuelle,

B. identifier lesdits deux points dans ladite une image individuelle, où les deux points sur l'ancre verticale dans ladite au moins une autre image individuelle sont reproduits sur ladite une image individuelle,

C. déterminer un segment de ligne entre les deux points dans ladite une image individuelle, où les deux points sur l'ancre verticale sont reproduits dans ladite au moins une autre image individuelle sur ladite une image individuelle, et

D. déterminer un deuxième segment de ligne le long d'une ligne, qui est défini par ledit premier segment de ligne, où le deuxième segment de ligne est tel que la distance entre les points extrêmes correspond à la distance entre les points extrêmes du premier segment de ligne et est positionné le long de la ligne de telle façon que le centre de gravité des points extrêmes du deuxième segment de ligne correspond au centre vertical de l'une image, où la zone quadrangulaire correspond aux deux points sur l'ancre verticale dans ladite une image individuelle et aux points extrêmes dudit deuxième segment de ligne.

13. Procédé selon la revendication 12, aussi comprenant une étape de générer une valeur d'offset verticale, dans laquelle une valeur d'offset est générée pour une utilisation dans l'étape de création de la mosaïque pour une zone quadrangulaire, qui est générée pour ladite autre image individuelle.

14. Procédé selon la revendication 9, où l'étape définissant une zone quadrangulaire comprend l'étape de définir deux zones quadrangulaires sur des faces opposées de l'ancre verticale, chacune par rapport aux applications de deux points sur une ancre verticale dans au moins deux autre images individuelles dans ladite une image individuelle.

15. Procédé selon la revendication 14, où l'étape de définir deux zones quadrangulaires comprend une étape de définition d'une zone quadrangulaire de gauche, dans laquelle une zone quadrangulaire de gauche est définie (i) par rapport aux applications des deux points sur l'ancre verticale dans une image individuelle de gauche dans ladite une image individuelle, et (ii) par rapport aux applications des deux points sur l'ancre verticale dans ladite une image individuelle, déplacé d'une manière verticale par rapport à un offset vertical entre le centre de l'une image individuelle et l'application du centre de l'image individuelle de gauche sur ladite une image individuelle.

16. Procédé selon la revendication 15, où l'étape définissant deux zones quadrangulaires comprend une étape définissant une zone quadrangulaire de droite, dans laquelle une zone quadrangulaire de droite est définie (i) par rapport aux applications des deux points sur l'ancre verticale dans une image individuelle de gauche dans ladite une image individuelle et (ii) pour lesdits deux points sur l'ancre verticale dans ladite une image individuelle.

17. Programme d'ordinateur comprenant des moyens de code de programme d'ordinateur pour exécuter toutes les étapes de l'une des revendications 9 à 16, quand ledit programme est exécuté dans un ordinateur.

18. Programme d'ordinateur selon la revendication 17, compris sur un media lisible par un ordinateur.

*F I G. 1*

MOSAIC IMAGE 22

. . . .

IMAGE 20(1)          IMAGE 20(2)                    IMAGE 20(I)

. . . .

21(1)          21(2)                              21(I)

EP 1 234 278 B1

*FIG. 2*

## FIG. 3B

## FIG. 3A

## FIG. 3C

## FIG. 3D

EP 1 234 278 B1

FIG. 4A

FIG. 4B

FIG. 4C

FIG. 4D

EP 1 234 278 B1

*F I G. 5A*

*F I G. 5B*

*F I G. 5C*

*F I G. 5D*

*FIG.6*

**_FIG. 7_**

100. IMAGE PROCESSOR 17 LOCATES A VERTICAL ANCHOR IN THE IMAGE 73(i)

101. IMAGE PROCESSOR 17 IDENTIFIES THE POINTS AT WHICH THE ANCHOR INTERSECTS WITH THE TOP AND BOTTOM BORDERS OF THE IMAGE 73(i)

102. IMAGE PROCESSOR 17 MAPS THE POINTS AT WHICH ANCHOR IN IMAGE 73(i+1) INTERSECTS TOP AND BOTTOM BORDERS OF IMAGE 73(i+1) TO IMAGE 73(i)

103. IMAGE PROCESSOR 17 IDENTIFIES THE LINE PASSING THROUGH POINTS MAPPED IN STEP 102

104. IMAGE PROCESSOR 17 IDENTIFIES TWO POINTS ON THE LINE IDENTIFIED IN STEP 103 SUCH THAT THE DISTANCE BETWEEN THEM ALONG THE LINE IS THE SAME AS THE DISTANCE BETWEEN POINTS MAPPED IN STEP 102

105. IMAGE PROCESSOR 17 IDENTIFIES THE REGION OF IMAGE 73(i) THAT IS TO BE USED AS THE STRIP 72(i) IS THE QUADRILATERAL DEFINED BY POINTS POINTS IDENTIFIED IN STEPS 101 AND 104

A

*FIG. 8*

A

106. IMAGE PROCESSOR 17 WARPS THE REGION
IDENTIFIED IN STEP 105 TO RECTANGULAR FORM USING
A SMOOTH

107. IMAGE PROCESSOR 17 MOSAICS THE WARPED
REGION GENERATED IN STEP 106 TO THE
PREVIOUSLY-GENERATED MOSAIC IMAGE 71, IF ANY

108. IMAGE PROCESSOR 17 DETERMINES THE VERTICAL
OFFSET TO BE USED FOR THE NEXT STRIP

*FIG. 8A*

EP 1 234 278 B1

*FIG. 9*

120. IMAGE PROCESSOR 17 INITIALLY IDENTIFIES THE VERTICAL ANCHOR IN THE IMAGE 73(i)

121. IMAGE PROCESSOR 17 IDENTIFIES THE POINTS AT WHICH THE ANCHOR INTERSECTS WITH THE TOP AND BOTTOM BORDERS OF THE IMAGE 73(i)

122. IMAGE PROCESSOR 17 DETERMINES A VALUE FOR "D," THE VERTICAL OFFSET BETWEEN THE CENTER OF THE IMAGE 73(i-1) AND THE CENTER OF THE IMAGE 73(i)

123. IMAGE PROCESSOR 17 IDENTIFIES TWO POINTS WHICH CORRESPOND TO POINTS IDENTIFIED IN STEP 121, SHIFTED VERTICALLY BY AN AMOUNT CORRESPONDING TO THE VALUE "d"

124. IMAGE PROCESSOR 17 PERFORMS OPERATIONS SIMILAR TO STEPS 122 AND 123 AS BETWEEN IMAGES 73(i) AND 73(i+1)

125. IMAGE PROCESSOR 17 MAPS THE POINTS AT WHICH THE VERTICAL ANCHOR IN IMAGE 73(i-1) INTERSECTS THE BOTTOM AND BORDERS OF IMAGE 73(i-1) TO IMAGE 73(i)

A

*FIG. 10*

A

126. IMAGE PROCESSOR 17 MAPS THE POINTS AT WHICH THE VERTICAL ANCHOR IN IMAGE 73(i-1) INTERSECTS THE BOTTOM AND BORDERS OF IMAGE 73(i+1) TO IMAGE 73(i)

127. IMAGE PROCESSOR 17 IDENTIFIES THE POINTS TO DEFINE RESPECTIVE LEFT AND RIGHT QUADRANGULAR REGIONS 82(i) AND 83(i)

128. IMAGE PROCESSOR 17 WARPS THE QUADRANGULAR REGIONS TO RECTANGULAR FORM AND MOSAICS THEM TO THE PREVIOUSLY-GENERATED MOSAIC IMAGE 71, IF ANY

*F I G. 10A*

*F I G. 11A*

94

91
97
96
90
92
95
93

*F I G. 11B*

| LEFT SIDE | FLOOR | RIGHT SIDE | CEILING |
|---|---|---|---|

MOTION

101        102        103        104

100

*F I G. 11C*

100(1)        100(2)        100(I)

150. IMAGE PROCESSOR 17 GENERATES OR OTHERWISE OBTAINED TWO SUCCESSIVE PANORAMIC IMAGES

151. IMAGE PROCESSOR 17, FOR EACH COLUMN, DETERMINES THE IMAGE MOTION BETWEEN THE TWO PANORAMIC IMAGES

152. IMAGE PROCESSOR 17 NORMALIZES RESPECTIVE COLUMNS IN EACH PANORAMIC IMAGE BY STRETCHING THEM IN RELATION TO THE RATIO OF THE IMAGE MOTION ASSOCIATED WITH THAT COLUMN TO THE IMAGE MOTION OF A PRE-SELECTED COLUMN

153. IMAGE PROCESSOR 17 SELECTS PARALLEL STRIPS THEREIN

154. IMAGE PROCESSOR 17 MOSAICS THE SELECTED PARALLEL STRIPS INTO THE MOSAIC IMAGE, IF ANY.

*F I G. 12*